# EUROPEAN PATENT APPLICATION

(11) **EP 3 893 008 A1**
(43) Date of publication of application: **13.10.2021**
(21) Application number: 20189026.6
(22) Date of filing: 31.07.2020
(51) Int. Cl.: G01R 31/317, G06F 21/55

(54) **METHOD AND APPARATUS FOR PERFORMING A SECURE TEST MODE OF A SOC**

(30) Priority: 07.04.2020 EP 20168456
(71) Applicant: Commsolid GmbH, 01099 Dresden (DE)
(72) Inventor: Jakschik, Daniel, 01157 Dresden (DE); Krause, Markus, 01307 Dresden (DE); Hesse, Kay, 01129 Dresden (DE)
(74) Representative: Lippert Stachow Patentanwälte Rechtsanwälte Partnerschaft mbB

(57) **Abstract**

The invention discloses a method for performing an optimized secure test mode of a System on Chip (SoC) and an apparatus performing the inventive method. The objective of the present invention to provide complete protection against leakage of sensitive information during test modes which is performable with minimal hardware overhead will be solved by a method comprising the following steps:
- feeding a primary analogue voltage to a test mode pad of the SoC and forming an internal test mode signal by a first Schmitt-Trigger;
- generating a delayed version of the internal test mode signal by an R-C-delay stage followed by a second Schmitt-Trigger;
- feeding the internal test mode signal and the delayed test mode signal into an XNOR gate which works as an edge-detector for the test mode signals and producing a low-pulse on both edges of the test mode signals;
- combining the low-pulse on both edges of the test mode signals with a regular functional reset signal by an AND gate and forming one chip-wide reset signal, whereas
- the chip-wide reset signal safely deletes any sensitive data that might have been present in flip-flops of the SoC.

## Description

The invention relates to a method for performing an optimized secure test mode of a System on Chip (SoC). The method allows a complete protection against leakage of sensitive information during a test mode of a SoC. A test mode can be an automatic test pattern generation scan (ATPG) or a memory Built-In Self-Test function (MBIST).

The invention relates also to an apparatus performing the inventive method.

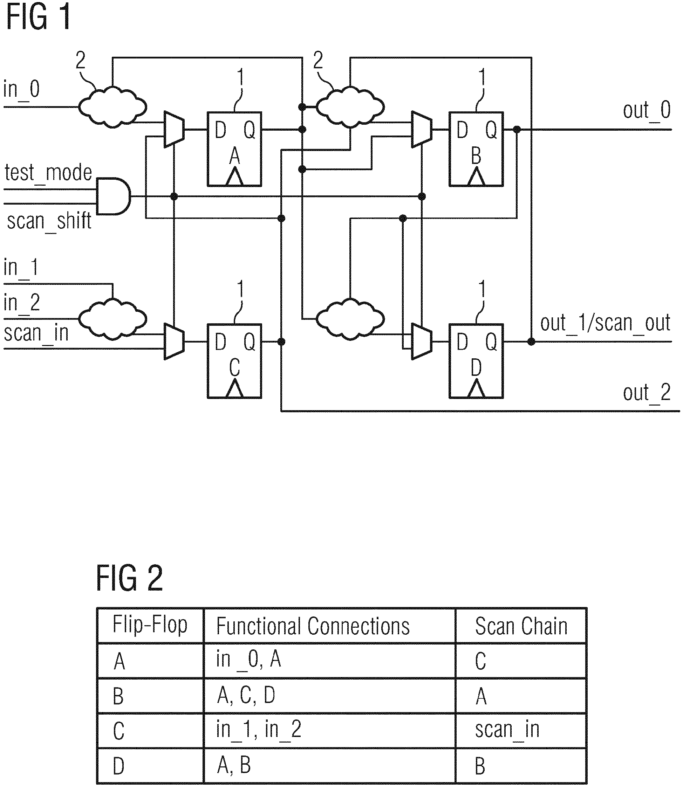

Today's highly integrated Systems on a Chip (SoCs) contain millions to billions of basic building blocks, like logic gates, flip-flops, RAM and possibly analog/mixed-signal blocks. In order to ensure production quality and guarantee functionality it is state-of-the-art to use what is known as ATPG logic scan (automatic test pattern generation). Essentially, this uses a special test mode, in which all flip-flops of the design are wired into one or more shift registers. External test equipment then uses these shift registers to load the flip-flops with known stimuli, then capture the responses from the combinational logic in between and finally shifting out these responses. This then can be used to determine production faults, like e. g. stuck-at a fixed value (short against V_{dd} or ground) or wrong logical behavior. The general approach is illustrated in figure 1 with just four flip-flops 1 as an example. Figure 1 depicts the functional combinational logic 2 in front of the flip-flop data inputs as clouds, because the actual function is not relevant for the scope of this explanation.

The four flip-flops A, B, C and D have the functional and test mode connections as shown in table 1 of figure 2.

So, the actual scan chain is scan in - C - A - B - D - scan_out, which is used to shift in stimuli and shift out the results from the capture operation, i. e. the values entered into the flip-flops 1 when scan_shift = 0.

Modern test approaches have extended this basic concept with test compression/decompression to cope with the fact that today's chips have a much higher ratio of number of flip-flops versus external ports, through which the scan shifting is executed, to minimize the time it takes to load all stimuli and receive the responses. Also, built-in self-test (BIST) logic is quite common, especially for testing on-chip memory.

All the aforementioned approaches share a common feature: they require a signal, typically a dedicated pin on the chip, to switch between normal functional mode and the test mode which then typically re-purposes other pins for test mode specific functions, like scan shift. Test equipment will assert this signal to enter into test mode and carry out their production tests.

Some of these SoCs now contain information that is considered sensitive or secret which must not be made openly available. Examples of these secrets include, but are not restricted to:
- authentication codes e. g. for mobile networks,
- PINs entered by a user,
- session keys for secure web surfing, using the HTTPS protocol,
- private keys for cryptographic signatures.

Since security aspects became more and more critical for ever more applications the usage of one form or another of cryptography became very wide-spread. The secrets mentioned before can be stored on chip in various locations:
Non-volatile locations, like
   - ROM,
   - fuses (write-only memory) or
   - hard-wired in logic;
Volatile locations, like
   - RAM or
   - flip-flops.

When the SoC handles critical data, then at least parts of the secret data will be stored at least temporarily in flip-flops.

Using ATPG scan for production test is indispensable, but it becomes problematic in connection with the storage of secret information too as described above. Production test as such is typically harmless, as at this point there is either no secret data present in the chip, because it is only entered later, or even if there is then the production environment is usually considered safe.

The test mode with support for scan, however, opens a door for malicious attackers to extract this sensitive information: Since the SoC itself has no way of knowing whether it will be put into test mode at a certain point in time, it cannot prevent secret data from being present in the flip-flops at the time it is switched to test mode. An attacker might then simply use the scan feature and shift out the contents of all flip-flops. Even if the scan chains typically are in a somewhat arbitrary order, e. g. bits of a key are not sorted to form an integer number, nor even contiguous, see figure 1, the information is leaked this way and the attacker can be able to reconstruct the contents, as the attackers might learn the scan chain ordering.

One counter measure found in SoCs today is to prevent scan testing altogether once secret information is present. Often, this is done in the same step when the secret information is programmed into the chip: typically, this programming is done by burning fuses, e. g. with chip-individual secret keys and then one fuse can be dedicated to disable scan mode. But there are two drawbacks to this approach:
Firstly, in today's deep sub-micron technologies it is often not possible to directly access an individual fuse and use it as input to a logic gate for the scan mode. Instead, foundries provide complete macros consisting of a fuse array and a corresponding controller, which e. g. combines multiple basic fuses to one logical fuse to cope with possible bit errors, or contain logic for error correcting codes.

Secondly, once scan mode is disabled this way, there is no way to use scan later in the product life cycle to e. g. analyze errors that occurred in the field.

It is therefore an objective of the present invention to present a method for performing a secure test mode of SOC, that provides complete protection against leakage of sensitive information during said test modes, like ATPG scan or MBIST, and which is performable with minimal hardware overhead.

The objective of the invention will be solved by a method for complete protection against leakage of sensitive information during a test mode for a System on Chip, the method comprising the following steps:
- feeding a primary analogue voltage to a test mode pad of the SoC and forming an internal test mode signal by a first Schmitt-Trigger;
- generating a delayed version of the internal test mode signal by an R-C-delay stage followed by a second Schmitt-Trigger;
- feeding the internal test mode signal and the delayed test mode signal into an XNOR gate which works as an edge-detector for the test mode signals and producing a low-pulse on both edges of the test mode signals;
- combining the low-pulse on both edges of the test mode signals with a regular functional reset signal by an AND gate and forming one chip-wide reset signal, whereas
- the chip-wide reset signal safely deletes any sensitive data that might have been present in flip-flops of the SoC.

The inventive method proposed allows using scan testing at any stage of the product life cycle of a SoC, and it is not dependent on specific fuse characteristics while safely preventing leaking secrets from inside the SoC.

Information stored in flip-flops is volatile and kept only until the flip-flop is reset or power is switched off. Benign test equipment will typically do a power cycle and/or reset anyway, before entering test mode. However, this is not sufficient against malicious attackers. One must assume that these have control over the chip's power supply and primary reset pin when they switch the chip into test mode to subsequently use scan to shift out the sensitive data.

Hence, the inventive method proposes a system-wide reset whenever the SoC enters or exits test mode. This reset then safely deletes any sensitive data that might have been present in the flip-flops. The necessity to do this reset both on entry and exit of test mode can be justified with the following explanations:
Reset on Entry: This is quite obvious - information from previous functional operations is still in the flip-flops and could be shifted out during scan. The reset deletes these data.

Reset on Exit: The reason for this is the fact that during scan the internal flip-flops can be loaded with predefined values (during production test these are the stimuli to check the chip's logic). These known data could cause leakage of sensitive data when switching back into normal functional mode. For example, internal state machines might be put in a state where during normal operation they would read out e. g. RAM and forward the data to external pins. Performing the inventive method a primary analogue voltage is firstly fed to a test mode pad of the SoC and a first Schmitt-Trigger forms an internal test mode signal. This internal test mode signal is used to generate a delayed version of the internal test mode signal by an R-C-delay stage followed by a second Schmitt-Trigger. The internal test mode signal and the delayed test mode signal is fed into an XNOR gate which works as an edge-detector for the test mode signals and produces a low-pulse on both edges of the test mode signals. The low-pulse on both edges of the test mode signals is combined with a regular functional reset signal by an AND gate and an one chip-wide reset signal is formed, whereas the chip-wide reset signal safely deletes any sensitive data that might have been present in flip-flops of the SoC, as a reset brings a flip-flop to a known state (typically 0, but 1 is also possible). Sensitive information like a secret key is basically a number stored in an array of flip-flops, so there is a pattern of 0s and 1s in the flip-flops. The reset then destroys this pattern.

With the inventive method potentially sensitive information in flip-flops can be safely deleted, with retaining full testability and no impact on reset, both functional as well as any reset test equipment may want to assert.

According to a variant of the inventive method, input signals of a memory of the SoC without a memory Built-In Self-Test function (MBIST) are fed into an XOR gate resulting in a XOR-merged vector, whereas the XOR-merged vector and a memory read data signal are multiplexed by a multiplexer for preventing read data from memory being shifted out during the test mode. This is a classical scan harness around memories. The invention mandates such a scan harness for memories without an MBIST controller.

The challenge of protecting memory without any specific test logic around the memory is to prevent read data from being shifted out during scan. Since during scan stimuli are loaded into the flip-flops that drive the memory controls, potentially through some combinational logic, it would be possible to execute a memory read cycle with the read data being captured into the first flip-flop stage after the memory. To counter this thread a state-of-the-art so-called scan-harness is used around the memory, comprising XOR gates and a multiplexer. Instead of capturing memory read data during scan, the flip-flops would capture an XOR-merged vector of the memory's input signals. This also has the positive side-effect of making these memory inputs observable during scan.

According to another variant of the inventive method, if a memory of the SoC with a memory Built-In Self-Test controller (MBIST) is scanned, flip-flops immediately after the memory are reset by using the method steps according to claim 1. The chip-wide reset goes to all flip-flops after the memory. A scan harness may or may not be used in conjunction with MBIST, although its use typically would improve test coverage. In case it is used, the XOR-harness XORs the input signals of the memory and forwards a XOR merged to a multiplexer, whereas the output of said multiplexer is forwarded to the flip-flop stage after the memory. However, the MBIST controller uses the direct memory output to feed it into the MBIST controller for pattern comparison. The use of a scan harness in combination with a MBIST controller protects against memory read-out during normal scan, but does not protect against information leaks through the MBIST controller itself as explained in the next paragraph.

For memories with attached MBIST (Memory Built-In Self-Test) logic, it is not a problem that information would leak out during scan shift, as long as the flip-flops immediately after the memory are reset after test as described above. Instead, MBIST opens a different potential leakage path. In principle MBIST logic will write the memory with known patterns (generated by finite-state-machines (FSMs)) and compare these later with the read-back values. In order to ensure production quality, most MBIST controllers provide the option to also forward either these read values or at least the error locations to some test result signals. This now would allow leaking memory contents outside. This threat can be countered in two ways: Either implementing only MBIST controllers that do not support this form of read out, or ensuring that the MBIST controller only allows reading out data the controller itself has written into the memory before.

Both counter measures can be implemented rather easily, as an MBIST controller essentially is just another form of FSM, i. e. hardwired logic.

A special threat may arise if the MBIST controller (just consisting of logic and flip-flops itself) is scanned itself. In this case, fed in stimuli may trigger a memory read and subsequent shift out may leak memory contents. Again, there are two ways to counter this threat: Either exclude the MBIST logic completely from scanning. Virtually all ATPG tools allow ignoring certain parts of the SoC's design, so this can be achieved rather easily. It comes at the cost of limited scan coverage, though, but this may be acceptable, as the MBIST logic represents only a very small percentage of the chip's gates. Alternatively, a scan harness according to claim 2 can be used, as described above, which will still allow MBIST operation, as the harness only affects scan, but prevents information leakage otherwise.

Pursuant to another variant of the inventive method, if a hardwired logic of tie-cells and additional stages of combinational logic is scanned, an output signal of the hardwired logic and an inverted test mode signal are inputted to an AND-gate for preventing leakage of information of the tie-cells during test mode.

Sensitive information in other locations may be stored in hardwired logic using so-called tie-cells, i. e. connections to power supply or ground to form a logical '1' or '0', potentially through additional stages of combinational logic. In this case, an AND-gate with one inverted input can be used to prevent leakage of this information during test.

Gating off the fan-in of the tied values into the flip-flop stage will again result in some loss of scan coverage, because scan cannot check the correct values anymore, but this needs to be accepted for security. This kind of hardwired logic only represents a very small portion of the chip's gates, so the loss is negligible. It can further be mitigated by implementing other means to check the correctness of the values, e. g. using parity schemes that do not reveal the actual values but just a checksum. According to a preferred variant of the inventive method, the method is performed whenever the SoC enters test mode and whenever the SoC exits test mode. The reset on entry is necessary to prevent shift out of sensitive data during test, while reset on exit is necessary to prevent the circuit from re-starting in a potentially dangerous state where the logic would be set up in a way to leak out sensitive data over misused functional interfaces.

Performing the inventive method whenever the SoC enters or exits test mode, results therefore in safely deleting sensitive information in flip-flops in the flip-flip stage, with retaining full testability and no impact on reset, both functional as well as any reset test equipment may want to assert.

The objective of the invention will also be solved by an apparatus which is able to perform the inventive method according to any of the claims 1 to 5. The apparatus comprises a first Schmitt-Trigger configured to form an internal test mode signal of a primary analogue voltage to a test mode pad of the SoC, an R-C-delay stage followed by a second Schmitt-Trigger configured to generate a delayed version of the internal test mode signal, an XNOR gate configured to work as an edge-detector for the internal test mode signal and the delayed test mode signal and to produce a low-pulse on both edges of the test mode signals, whereas the apparatus further comprises an AND-gate configured to combine the low-pulse on both edges of the test mode signals with a regular functional reset signal and to form an one chip-wide reset signal, whereas the chip-wide reset signal safely deletes any sensitive data that might have been present in flip-flops of the SoC. The point is to produce a reset on entry/exit of test mode that has the same effect as the normal functional global reset.

A primary analogue voltage is fed to a test mode pad of the SoC. At or in the pad circuitry there is a Schmitt-Trigger circuit, potentially with some additional level shifter, that forms the incoming test mode signal. The proposed hardware extension of a SoC comprises an R-C-delay stage, followed by another Schmitt-Trigger. This will generate a delayed version of the primary test mode signal, which is fed together with the internal test mode signal into an XNOR gate that essentially works as an edge detector for the test mode signal. It produces a low-pulse on both edges of the original test mode, which then is combined with the regular functional reset.

With the inventive circuit the goal of deleting potentially sensitive information in the flip-flop stage is achieved, with retaining full testability and no impact on reset, both functional as well as any reset test equipment may want to assert.

The invention will be explained in more detail using exemplary embodiments.

The appended drawings show
- Fig. 1: Illustration of an ATPG Scan (state-of-the-art);
- Fig. 2: Flip-Flop connectivity of fig. 1;
- Fig. 3: Generating of reset on entry and exit of test mode according to the invention;
- Fig. 4: Timing diagram for reset generation according to the invention;
- Fig. 5: Scan harness around memory (state-of-the-art) in combination with the invention;
- Fig. 6: Memory with MBIST Controller (state-of-the-art) in combination with the invention;
- Fig. 7: Protecting hardwired logic.

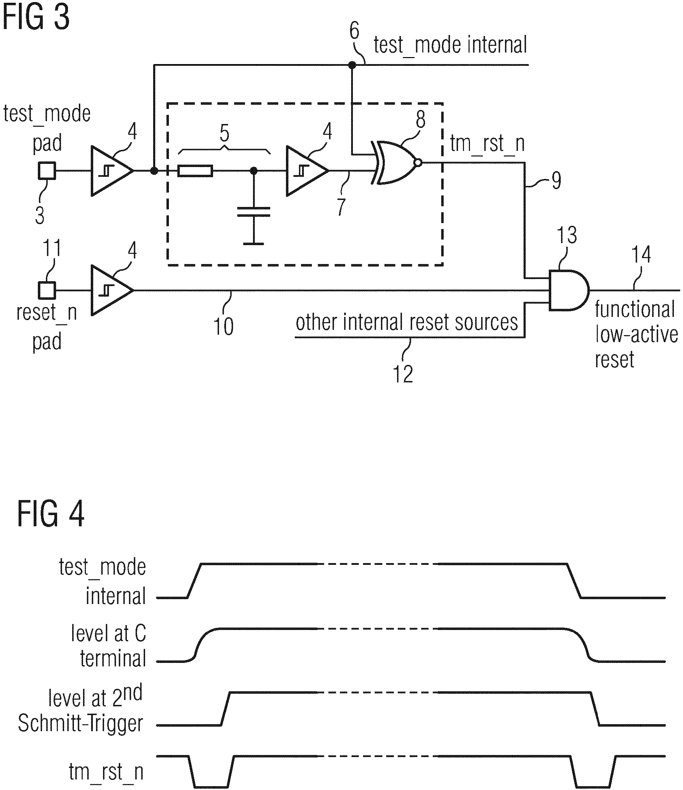

Figure 3 shows the generating of reset on entry and exit of test mode according to the invention. The proposed hardware extension is illustrated in figure 3, specifically in the dashed box. Figure 3 shows the pad 3 for the primary test mode signal going into the SoC. At or in the pad circuitry there is a Schmitt-Trigger circuit 4, potentially with some additional level shifter, that forms the incoming test mode signal. The important step now is to add an R-C-delay stage 5, followed by another Schmitt-Trigger 4. This will generate a delayed version 7 of the primary test mode signal 6, see also figure 4, which is fed together with the internal test mode signal 6 into an XNOR gate 8 that essentially works as an edge detector for the test mode signal 9. It produces a low-pulse on both edges of the original test mode signal 6, which then is combined with the regular functional reset signal 10. For illustrative purposes figure 3 also shows a pad for the functional reset 11 (low-active), which is present in virtually all modern SoCs. It also shows how all these low-active reset sources (functional reset 10, test mode reset 9 and other internal reset source 12) are combined into one chip-wide reset 14 with an AND gate 13. Figure 4 shows the signal timing at various points of the circuit, with the dashed portions illustrating time during which the signals remain constant, i. e. during the actual test mode.

On-chip memory for the purpose of testing can come in one of two flavors: Either without any specific test logic around the memory or with an MBIST attached. In terms of protecting sensitive information in the memory, these two variants pose different challenges.

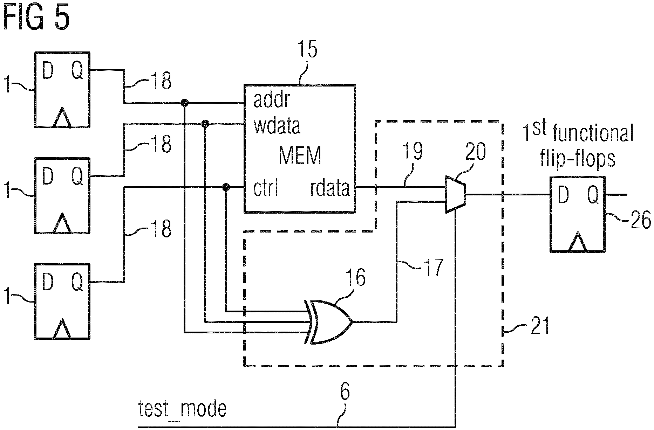

Figure 5 shows the case without using MBIST logic. The challenge there is to prevent read data from being shifted out during scan. Since during scan stimuli are loaded into the flip-flops 1 that drive the memory controls, potentially through some combinational logic, it would be possible to execute a memory read cycle with the read data being captured into the first flip-flop stage 26 after the memory 15. To counter this thread a state-of-the-art so-called scan-harness 21 is used around the memory, consisting of the XOR gates 16 and the multiplexer 20 shown in the figure 5. Instead of capturing memory read data during scan, the flip-flops of the flip-flop stage 26 would capture an XOR-merged vector 17 of the memory's input signals 18. This also has the positive side-effect of making these memory inputs observable during scan. The scan harness is used to serve the purpose of the invention and is therefore mandated.

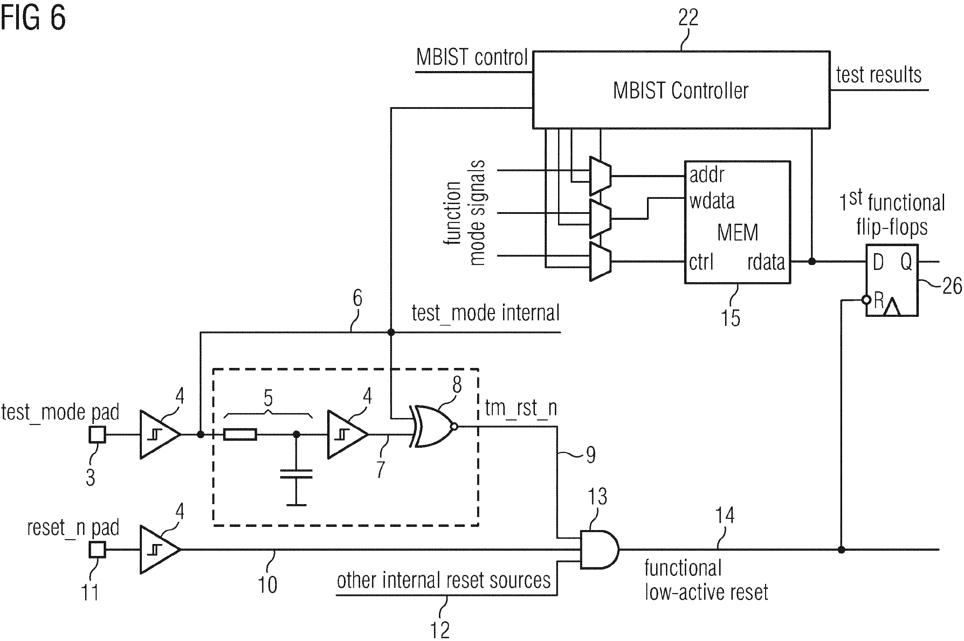

Another case is memories with attached MBIST (Memory Built-In Self-Test) logic, as illustrated in figure 6. Here, it is not a problem that information would leak out during scan shift as long as the flip-flops 26 immediately after the memory 15 are reset after test according to the inventive method.

During MBIST itself the flip-flops 26 marked as 1^{st} functional flip-flop will receive memory data, however, these are typically specific patterns to detect problems in the memory itself, they are not the actual operational contents (like sensitive keys, etc.). Nevertheless, MBIST is executed while the "test_mode" signal is held high, so according to the logic in fig.3, these flip-flops 26 will be reset at the end of test mode. There is a potential security problem with MBIST, though: Some MBIST controllers 22 provide a function for so-called bit-mapping, which is used during MBIST to exactly pinpoint locations in the memory where the MBIST has detected errors. This could potentially be used to read out existing memory contents (like sensitive keys) immediately after entering MBIST mode. It is therefore imperative for the purpose of this invention that the MBIST controller 22 either does not support bit mapping at all e. g. only provides an accumulated "good"/"bad" indication, which might not be desirable for production optimization purposes, or only allow bit mapping after the MBIST controller has filled the memory with its own test pattern, thus overwriting and deleting any sensitive information.

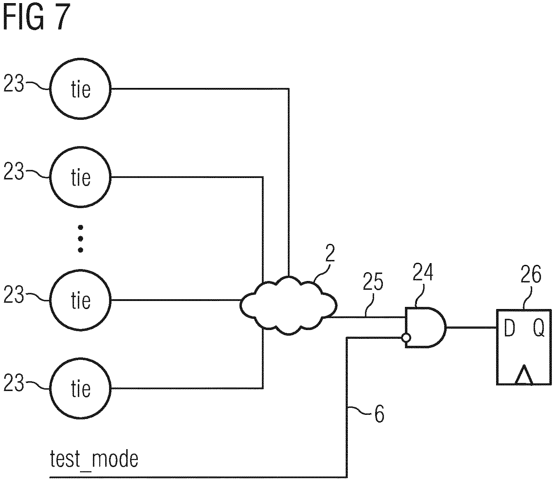

Sensitive information in other locations may be stored in hardwired logic using so-called tie-cells 23, i. e. connections to power supply or ground to form a logical '1' or '0', potentially through additional stages of combinational logic. In this case, a gate 24 as shown in figure 7 can be used to prevent leakage of this information during test. The additional (not functionally necessary) AND gate 24 will prevent to load the pattern from the tie-cells into the flip-flops during test mode. Although this will lower the overall test coverage, as points in the logic cone before the AND gate 24 cannot be observed, this is usually acceptable as it only affects a very small portion of the SoC's logic. Otherwise the sensitive information would be loaded into the flip-flop 26 during test mode and could be shifted out. The circuit according to figure 3 could not prevent this, although it will clear the flip-flops 26 on exit from test mode.

### List of Reference Signs

- 1: flip-flop
- 2: functional combinational logic
- 3: test mode pad
- 4: Schmitt Trigger
- 5: R-C-delay stage
- 6: Test mode signal
- 7: Delayed test mode signal
- 8: XNOR gate
- 9: Low pulse of the test mode signals, test mode reset
- 10: Regular functional reset signal
- 11: Reset pin
- 12: Other internal reset signals of other reset sources
- 13: AND gate
- 14: Chip-wide reset signal
- 15: Memory
- 16: XOR gate
- 17: XOR merged vector
- 18: Input signal to a memory
- 19: Read data signal from memory
- 20: Multiplexer
- 21: Scan harness
- 22: MBIST controller'
- 23: Tie-cell
- 24: AND gate with one inverted input
- 25: Output signal of a hardwired logic
- 26: Flip-flop stage

## Claims

1. Method for complete protection against leakage of sensitive information during a test mode for a System-on-Chip, SoC, the method comprising the following steps:
- feeding a primary analogue voltage to a test mode pad (3) of the SoC and forming an internal test mode signal (6) by a first Schmitt-Trigger (4);
- generating a delayed version of the internal test mode signal (7) by an R-C-delay stage (5) followed by a second Schmitt-Trigger (4);
- feeding the internal test mode signal (6) and the delayed test mode signal (7) into an XNOR gate (8) which works as an edge-detector for the test mode signals and producing a low-pulse on both edges of the test mode signals;
- combining the low-pulse (9) with a regular functional reset signal (10) by an AND gate (13) forming one chip-wide reset signal (14), whereas
- the chip-wide reset signal (14) safely deletes any sensitive data that might have been present in flip-flops of the SoC.

2. Method for complete protection against leakage of sensitive information of a SoC during test mode according to claim 1, wherein input signals (18) of a memory (15) of the SoC without a memory Built-In Self-Test function, MBIST, are fed into an XOR gate (16) resulting in a XOR-merged vector (17), whereas the XOR-merged vector (17) and a memory read data signal (19) are multiplexed by a multiplexer (20) for preventing read data from memory (15) being shifted out during the test mode.

3. Method for complete protection against leakage of sensitive information of a SoC during test mode according to claim 1, wherein if a memory (15) of the SoC with a memory Built-In Self-Test controller (22), MBIST, is scanned, flip-flops (26) immediately after the memory (15) are reset by using method steps according to claim 1.

4. Method for complete protection against leakage of sensitive information of a SoC during test mode according to claim 1, wherein if a hardwired logic of tie-cells (23) and additional stages of combinational logic (2) is scanned, an output signal (25) of the hardwired logic and an inverted test mode signal are inputted to an AND-gate (24) for preventing leakage of information of the tie-cells (23) during test mode.

5. Method for complete protection against leakage of sensitive information of a SoC during test mode according to claim 1, wherein the method is performed whenever the SoC enters test mode and whenever the SoC exits test mode.

6. Apparatus for performing the method according to claims 1 to 5, wherein the apparatus comprises a first Schmitt-Trigger (4) configured to form an internal test mode signal (6) of a primary analogue voltage to a test mode pad (3) of the SoC, an R-C-delay stage (5) followed by a second Schmitt-Trigger (4) configured to generate a delayed version (7) of the internal test mode signal, an XNOR gate (8) configured to work as an edge-detector for the internal test mode signal (6) and the delayed test mode signal (7) and to produce a low-pulse on both edges of the test mode signals, whereas the apparatus further comprises an AND-gate (13) configured to combine the low-pulse on both edges of the test mode signals (6, 7) with a regular functional reset signal (10) and to form one chip-wide reset signal (14), whereas the chip-wide reset signal (14) safely deletes any sensitive data that might have been present in flip-flops of the SoC.
